# EUROPÄISCHE PATENTSCHRIFT

(11) **EP 0 803 239 B1**
(45) Veröffentlichungstag und Bekanntmachung des Hinweises auf die Patenterteilung: **28.11.2001**
(21) Anmeldenummer: 97106012.4
(22) Anmeldetag: 11.04.1997
(51) Int. Cl.: A61G 13/12

(54) **Beinhalteranordnung**
Leg holder device
Dispositif support de jambe

(30) Priorität: 24.04.1996 DE 19616375
(43) Veröffentlichungstag der Anmeldung: 29.10.1997
(73) Patentinhaber: MAQUET Aktiengesellschaft, 76437 Rastatt (DE)
(72) Erfinder: Dornauer, Matthias, 76316 Malsch (DE); Frietsch, Ute, 76571 Gaggenau (DE)
(74) Vertreter: Schaumburg, Thoenes, Thurn Patentanwälte

(56) Entgegenhaltungen:
- EP-A- 0 058 411
- DE-A- 3 725 184
- US-A- 4 443 005
- US-A- 5 369 827

## Beschreibung

Die Erfindung betrifft eine Beinhalteranordnung an einem Bett oder Stuhl für gynäkologische oder urologische Behandlungen und/oder Untersuchungen, umfassend zwei Beinhalter mit je einer stabförmigen Stütze und einer an einem Ende derselben angeordneten Beinauflage, wobei die Stütze mit ihrem der Beinauflage fernen Ende über ein Kugelgelenk an einer Halteraufnahme verstellbar gelagert und mittels einer Feststelleinrichtung in einer gewünschten Stellung feststellbar ist.

Dokument US-A-4 443 005 offenbart einen solchen Beinhalter, wie er auch im Obergriff des Anspruchs 1 definiert ist.

Bei einer bekannten Beinhalteranordnung der vorstehend genannten Art ist der Kugelzapfen des Kugelgelenkes an einem horizontalen Schenkel der Halteraufnahme derart angeordnet, daß die Mittelachse des Kugelzapfens horizontal und senkrecht zur Längsmittelachse der Patientenauflage des Bettes oder Stuhles gerichtet ist. Es hat sich gezeigt, daß bei dieser Anordnung der Bewegungsbereich der Beinauflage begrenzt ist und daß eine Verstellung der Beinauflagen im Sinne einer Änderung der Spreizung der Beine des Patienten ohne eine Längenverstellung der Stützen nicht möglich ist. Dies bedeutet, daß die untersuchende oder behandelnde Person das Bein des Patienten bei der Verstellung der Beinauflage tragen muß. Dadurch ist die Verstellung der Beinauflagen sowohl für den Patienten als auch für die behandelnde oder untersuchende Person mühsam und zeitraubender.

Der Erfindung liegt die Aufgabe zugrunde, eine Beinhalteranordnung der eingangs genannten Art so auszubilden, daß die Stellung der Beinauflagen auf einfache Weise und ohne Kraftanstrengung geändert werden kann und sowohl der Komfort für den Patienten als auch der Bedienungskomfort für die behandelnde oder untersuchende Person erhöht wird.

Diese Aufgabe wird erfindungsgemäß dadurch gelöst, daß das Kugelgelenk jeweils derart an der Halteraufnahme angeordnet ist, daß die Mittelachse des Kugelzapfens in einer zentralen Mittelstellung der Gelenkteile des Kugelgelenks horizontal und unter einem Winkel von annähernd 45° zu der Längsmittelachse der Patientenauflage des Bettes oder Stuhles gerichtet ist.

Diese Anordnung des Kugelgelenkes ermöglicht eine Verstellung der Beinhalter in der Weise, daß sie weitgehend der natürlichen Bewegungsmöglichkeit der Hüftgelenke des Patienten bei der Beinspreizung folgen. Eine Änderung der Beinspreizung ist dabei ohne Längenverstellung der Stützen möglich, auch wenn diese zweckmäßigerweise in ihrer Länge verstellbar sind, um die Beinhalter an unterschiedlich große Personen anpassen zu können.

Bei der bekannten Beinhalteranordnung konnte der jeweilige Beinhalter über eine Klemmschraube in seiner Stellung fixiert werden. Dadurch war das Lösen und Klemmen der Beinhalter relativ zeitaufwendig. Zur Beseitigung dieses Nachteiles wird erfindungsgemäß vorgeschlagen, daß die Feststelleinrichtung eine über einen Exzenterhebel verstellbare Klemmeinrichtung umfaßt. Dies ermöglicht eine rasche und bequeme Betätigung der Feststelleinrichtung auch mit einer Hand.

Bei einer bevorzugten Ausführungsform umfaßt die Klemmeinrichtung dabei ein an der Kugelpfanne schwenkbar gelagertes Klemmstück, wobei der Exzenterhebel in der Kugelpfanne oder dem Klemmstück drehbar gelagert ist und wobei auf einem bezüglich der Drehachse exzentrischen Abschnitt des Exzenterhebels ein Spannelement drehbar gelagert ist, das an dem jeweils anderen Teil der Klemmeinrichtung (Klemmstück oder Kugelpfanne) angreift.

Weitere Merkmale und Vorteile der Erfindung ergeben sich aus der folgenden Beschreibung, welche in Verbindung mit den beigefügten Zeichnungen die Erfindung anhand eines Ausführungsbeispiels erläutert. Es zeigen:
- Figur 1: eine schematische Endansicht einer Patientenauflage mit der erfindungsgemäßen Beinhalteranordnung,
- Figur 2: eine schematische Draufsicht auf die Patientenauflage und die Beinhalteranordnung,
- Figur 3: einen Vertikalschnitt in einer die Mittelachse des Kugelzapfens enthaltenden Ebene durch die Kugelpfanne und die Klemmeinrichtung und
- Figur 4: einen Schnitt durch einen Teil der Klemmeinrichtung entlang der Linie IV-IV in Figur 3.

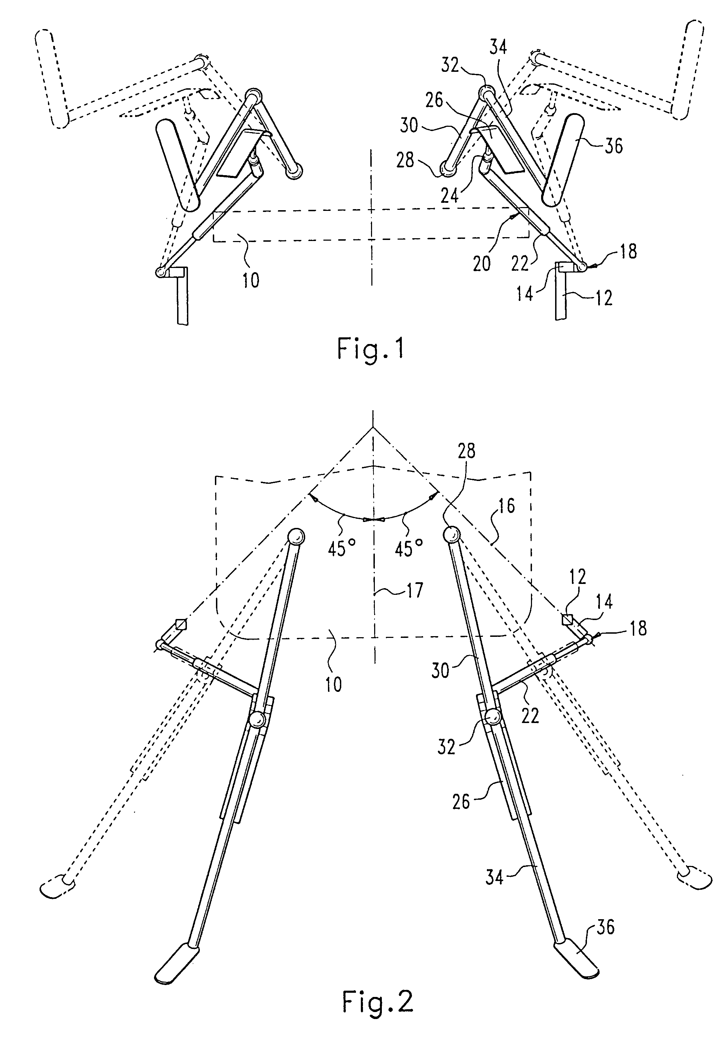

In den Figuren 1 und 2 ist mit 10 das Sitz- oder Auflagepolster eines im übrigen nicht dargestellten Stuhls für gynäkologische oder urologische Behandlungen und/oder Untersuchungen dargestellt. Es kann sich jedoch auch um das Auflagepolster eines Entbindungbettes handeln. Nahe dem Längsende im Bereich der Ecken des Sitzpolsters sind Halteraufnahmen mit jeweils einem am Bett- oder Stuhlrahmen befestigten vertikalen Schenkel 12 und einem horizontalen Schenkel 14 angeordnet. Der horizontale Schenkel 14 ist so gerichtet, daß seine Längsachse 16 einen Winkel von ca. 45° mit der Längsmittelachse 17 des Sitzpolsters 10 und damit mit der Längsmittelachse eines auf dem Sitzpolster 10 liegenden Patienten bildet.

An dem freien Ende des horizontalen Schenkels 14 ist über ein allgemein mit 18 bezeichnetes Kugelgelenk ein Beinhalter 20 angelenkt. Der Beinhalter 20 umfaßt eine in ihrer Länge verstellbare annähernd L-förmige Stütze 22, die am freien Ende ihres kurzen L-Schenkels über ein Kugelgelenk 24 eine Beinauflage 26 trägt. Dieser Beinhalter 20 ist für sich gesehen an sich bekannt und dient zur Auflage eines Beines eines Patienten, das ebenfalls schematisch dargestellt ist. Dabei ist mit 28 das Hüftgelenk, mit 30 der Oberschenkel, mit 32 das Kniegelenk, mit 34 der Unterschenkel und mit 36 der Fuß des Patienten bezeichnet. In den Figuren 1 und 2 sind die Beinhalter 20 und die Beine des Patienten jeweils in zwei unterschiedlich gespreizten Stellungen wiedergegeben, einmal mit ausgezogenen Linien und einmal mit gestrichelten Linien.

Das Kugelgelenk 18, über das der jeweilige Beinhalter 20 an dem horizontalen Schenkel 14 angelenkt ist, umfaßt einen Kugelzapfen 38, der so an dem horizontalen Schenkel 14 der Halteraufnahme angeordnet ist, daß seine Mittelachse 40 mit der Längsachse 16 des horizontalen Schenkels zusammenfällt. Auf der Kugel des Kugelzapfens 38 ist eine Pfanne 42, die mit der Stütze 22 des Beinhalters 20 einstückig verbunden ist.

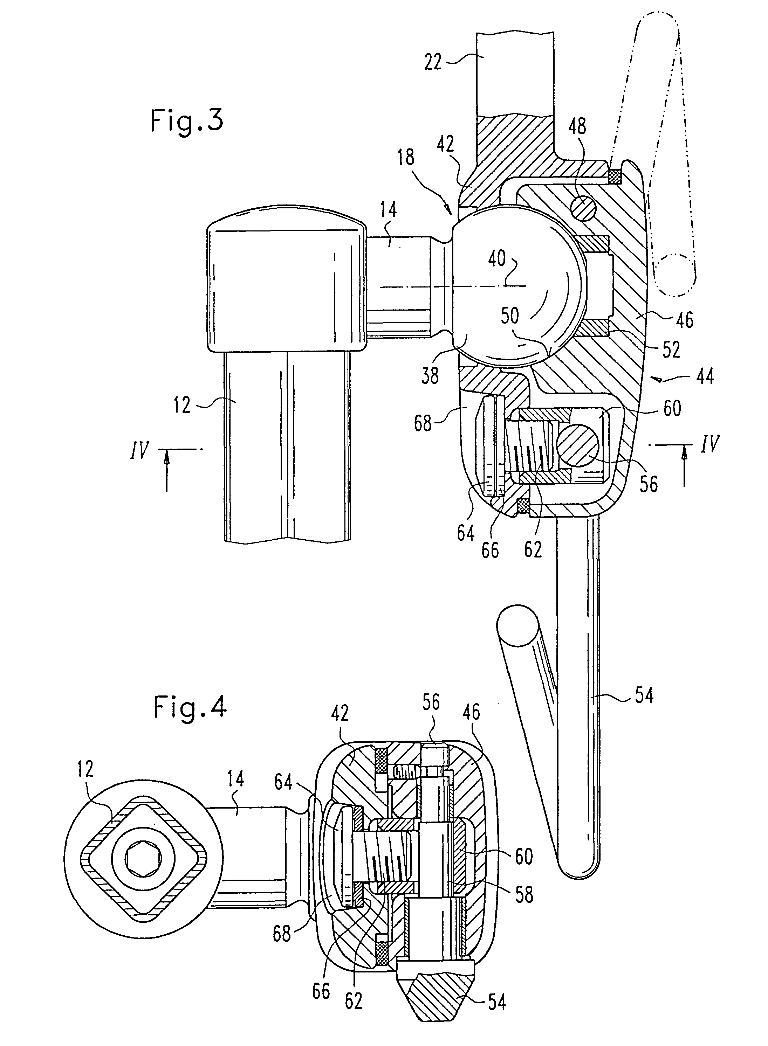

Zum Feststellen des Beinhalters an dem Kugelzapfen 38 dient eine Klemmeinrichtung 44. Diese umfaßt ein Klemmstück 46, das um eine Achse 48 schwenkbar an der Kugelpfanne 42 gelagert ist und innerhalb einer der Kugeloberfläche des Kugelzapfens 38 angepaßten Gleitfläche 50 einen Klemmeinsatz 52 trägt. In dem Klemmstück 46 ist ein Exzenterhebel 54 um eine zur Schwenkachse 48 des Klemmstückes 46 parallele Drehachse 56 drehbar gelagert. Auf einem mittleren Exzenterabschnitt 58 des Exzenterhebels 54 ist ein Spannstück 60 drehbar gelagert, in das ein Spannzapfen 62 eingeschraubt ist. Dieser Spannzapfen 62 durchsetzt eine Bohrung in der Kugelpfanne 42 und liegt mit einem Kopfteil 64 über eine elastische Scheibe 66 am Grund einer Aussparung 68 in der Kugelpfanne 42 an. Durch eine Drehung des Exzenterhebels 54 zwischen den in Figur 3 durch ausgezogene und strichpunktierte Linien wiedergegebenen Stellungen wird über den Exzenterabschnitt 58 der Abstand zwischen der an dem Ring 66 anliegenden Fläche des Kopfes 64 des Spannzapfens 62 und der ihm zugewandten Fläche des Klemmstückes 46 verändert. Dadurch wird das Klemmstück 46 in Richtung auf die Kugelpfanne bzw. die Kugeloberfläche des Kugelzapfens 38 gespannt bzw. von ihr abgehoben.

Bei der erfindungsgemäßen Beinhalteranordnung ist die Veränderung der Beinspreizung ohne eine Längenauszugsverstellung der Beinhalterstützen 22 möglich. Die Länge der Stützen 22 braucht nur auf die jeweilige Körpergröße eingestellt zu werden. Das Gewicht des Beines wird beim Verstellen der Beinhalter auf das Kugelgelenk übertragen. Die Bewegung der Beinhalter folgt der natürlichen Bewegung der Beine in den Hüftgelenken, so daß die Verstellung der Beinhalter für den Patienten komfortabler ist. Beim Verstellen der Beinhalter braucht die Bedienungsperon lediglich mit der einen Hand den Beinhalter zu halten und zu verschwenken, während mit der anderen Hand der Exzenterhebel zum Lösen und Feststellen der Klemmeinrichtung betätigt werden kann.

## Patentansprüche

1. Beinhalteranordnung an einem Bett oder Stuhl für gynäkologische oder urologische Behandlungen und/oder Untersuchungen, umfassend zwei Beinhalter (20) mit je einer stabförmigen Stütze (22) und einer an einem Ende derselben angeordneten Beinauflage (26), wobei die Stütze (22) mit ihrem der Beinauflage (26) fernen Ende über ein Kugelgelenk (18) an einer Halteraufnahme (14) verstellbar gelagert und mittels einer Feststelleinrichtung (44) in einer gewünschten Stellung feststellbar ist, **dadurch gekennzeichnet, daß** das Kugelgelenk (18) jeweils derart an der Halteraufnahme (14) angeordnet ist, daß die Mittelachse (40) des Kugelzapfens (38) in einer zentralen Mittelstellung der Gelenkteile (38, 42) horizontal und unter einem Winkel von annähernd 45° zu der Längsmittelachse (17) der Patientenauflage (10) des Bettes oder Stuhles gerichtet ist.

2. Beinhalteranordnung nach Anspruch 1, **dadurch gekennzeichnet, daß** die Stütze (22) in ihrer Länge verstellbar ist.

3. Beinhalteranordnung nach Anspruch 1 oder 2, **dadurch gekennzeichnet, daß** die Feststelleinrichtung (44) eine über einen Exzenterhebel (54) verstellbare Klemmeinrichtung umfaßt.

4. Beinhalteranordnung nach Anspruch 3, **dadurch gekennzeichnet, daß** die Klemmeinrichtung ein an der Kugelpfanne (42) schwenkbar gelagertes Klemmstück (46) umfaßt, daß der Exzenterhebel (54) in der Kugelpfanne (42) oder dem Klemmstück (46) drehbar gelagert ist und daß auf einem bezüglich der Drehachse (48) exzentrischen Abschnitt (58) des Exzenterhebels (54) ein Spannelement (60, 62) drehbar gelagert ist, das an dem jeweils anderen Teil der Klemmeinrichtung (Klemmstück (46) oder Kugelpfanne (42)) angreift.

## Claims

1. A leg holder assembly attached to a bed or a chair for gynaecological or urological treatment and/or examinations, comprising two leg holders (20) each of which has a rod-formed support (22) and a leg seat (26) disposed at an end thereof, said support (22) being adjustably mounted by means of a ball joint (18) to a holding device (14) at the respective end spaced apart from the leg seat (26) and being fixable to a desired position by means of a locking device (44), **characterized in that** each ball joint (18) is mounted to said holding device (14) such that in a central position of the articulated parts (38, 42) the center axis (40) of the ball pivot (38) is aligned horizontally and under an angle of approximately 45° relative to the longitudinal center axis (17) of the patient support surface (10) of the bed or chair.

2. A leg holder assembly according to claim 1, **characterized in that** the length of said support (22) is adjustable.

3. A leg holder assembly according to claims 1 or 2, **characterized in that** said locking device (44) comprises clamping means adjustable by means of a cam lever (54).

4. A leg holder assembly according to claim 3, **characterized in that** said clamping means comprise a clamping piece (46) pivotably mounted to the ball cup (42), **in that** said cam lever (54) is rotatably supported in said ball cup (42) or said clamping piece (46) and that a tensioning element (60, 62) is rotatably supported on a portion (58) of the cam lever (54) eccentric relative to the rotational axis, said tensioning element (60, 62) acting on the respective other part of the clamping means (clamping piece (46) or ball cup (42)).

## Revendications

1. Structure porte-jambe agencée au niveau d'un lit ou d'une chaise pour des soins et/ou des analyses urologiques ou gynécologiques, comportant deux porte-jambe (20) dotés chacun d'un étançon (22) en forme de barre et d'un support de jambe (26) agencé à l'extrémité de celui-ci, l'extrémité de l'étançon (22) du côté opposé au support de jambe (26) étant reçue dans un logement de support (14) de façon réglable au moyen d'une articulation à rotule (18) et pouvant être bloquée dans une position souhaitée au moyen d'un dispositif de fixation (44), **caractérisée en ce que** l'articulation à rotule (18) est agencée au niveau du logement de support (14) de telle façon que l'axe médian (40) du pivot de rotule (38) est dirigé dans une position médiane centrale de l'articulation (38, 42) horizontalement et en faisant un angle d'environ 45° par rapport à l'axe médian longitudinal (17) de la partie porte-malade (10) du lit ou de la chaise.

2. Structure porte-jambe selon la revendication 1, **caractérisée en ce que** l'étançon (22) est réglable en longueur.

3. Structure selon la revendication 1 ou 2, **caractérisée en ce que** le dispositif de fixation (44) comporte un dispositif de serrage réglable au moyen d'un levier excentrique (54).

4. Structure porte-jambe selon la revendication 3, **caractérisée en ce que** le dispositif de serrage comporte une pièce de serrage (46) logée de façon pivotante dans une cuvette de rotule (42), **en ce que** le levier excentrique (54) est logé à rotation dans la cuvette de rotule (42) ou bien dans la pièce de serrage (46), et **en ce qu'**un élément de serrage (60, 62) est logé à rotation sur une section (58), excentrée par rapport à l'axe de rotation (48), du levier excentrique (54), lequel élément de serrage est en prise avec l'autre partie du dispositif de serrage (pièce de serrage (46) ou bien cuvette de rotule (42)).
